# EUROPÄISCHE PATENTSCHRIFT

(11) **EP 4 263 290 B1**
(45) Veröffentlichungstag und Bekanntmachung des Hinweises auf die Patenterteilung: **04.12.2024**
(21) Anmeldenummer: 21794786.0
(22) Anmeldetag: 15.10.2021
(51) Int. Cl.: B60Q 9/00, B60Q 1/14

(54) **VERFAHREN ZUM BETREIBEN EINES LICHTASSISTENZSYSTEMS**
METHOD FOR OPERATING A LIGHT ASSISTANCE SYSTEM
PROCÉDÉ DE FONCTIONNEMENT D'UN SYSTÈME D'ASSISTANCE LUMINEUSE

(30) Priorität: 18.12.2020 DE 102020007759
(43) Veröffentlichungstag der Anmeldung: 25.10.2023
(73) Patentinhaber: Mercedes-Benz Group AG, 70372 Stuttgart (DE)
(72) Erfinder: HERMANN, Klaus, Alfred, 71116 Gärtringen (DE)
(74) Vertreter: Novagraaf Group
(86) Internationale Anmeldenummer: PCT/EP2021/078574
(87) Internationale Veröffentlichungsnummer: WO 2022/128206

(56) Entgegenhaltungen:
- WO-A2-2004/076231
- DE-A1- 102009 038 919
- US-A1- 2011 280 026
- US-A1- 2014 070 698

## Beschreibung

Die Erfindung betrifft ein Verfahren zum Betreiben eines Lichtassistenzsystems für ein Fahrzeug nach der im Oberbegriff von Anspruch 1 näher definierten Art.

Lichtassistenzsysteme für Fahrzeuge sind soweit aus dem Stand der Technik bekannt. Sie werden gelegentlich auch unter der englischen Bezeichnung Intelligent Headlight Control (IHC) beschrieben. Im Kern bestehen sie immer aus einer typischerweise in Fahrtrichtung nach vorn gerichteten Kamera, über welche entgegenkommende und vorausfahrende Verkehrsteilnehmer erkannt und aus der Lichtverteilung des Fernlichts des eigenen Fahrzeugs ausgenommen werden. Dies kann beispielsweise durch ein reines Abblenden von einem Fernlicht auf ein sogenanntes Abblendlicht erfolgen, oder auch bei komplexeren Beleuchtungssystemen durch das gezielte Entblenden dieser Verkehrsteilnehmer, indem in der Fernlichtverteilung eine "Lücke" erzeugt wird, in dem Bereich, indem der z.B. entgegenkommende Verkehrsteilnehmer nicht geblendet werden soll.

Des Weiteren ist es so, dass typischerweise derartige Lichtassistenzsysteme so betrieben werden, dass der Fernlichtassistent nur auf Landstraßen, Autobahnen und dergleichen zum Einsatz kommen, während er in einer städtischen Umgebung, also beispielsweise im Stadtverkehr, beim Durchfahren von Dörfern, Siedlungen, Industriegebieten oder dergleichen abgeschaltet bleibt. Beispielhaft kann in diesem Zusammenhang auf die DE 10 2009 028 342 A1 hingewiesen werden, welche ein Verfahren und eine Vorrichtung zur Aktivierung des Stadtlichts eines Fahrzeugs in Abhängigkeit der erkannten Umgebung beschreibt. Dieses Stadtlicht ist dabei im Rahmen des oben beschriebenen Sinns der Verzicht auf ein Aktivieren des Fernlichts in dem Lichtassistenten. Um die städtische Umgebung zu erkennen, werden im Falle der genannten Schrift Straßenbeleuchtungseinheiten erfasst und anhand des räumlichen Abstands dieser Straßenbeleuchtungseinheiten zueinander wird festgestellt, ob das Fahrzeug sich in einer städtischen Umgebung befindet oder nicht. Andere Verfahren zum Feststellen einer städtischen Umgebung, beispielsweise anhand des Beleuchtungslevels in der Umgebung oder anhand von Satelliten-Navigationskoordinaten des Fahrzeugs und einem Abgleich mit einer entsprechenden Karte sind aus dem weiteren Stand der Technik ebenso bekannt.

In der Praxis kann es nun vorkommen, dass entsprechende Umgebungssensoren eines Fahrzeugs zwar an sich funktionieren, aber beispielsweise durch eine Verschmutzung blockiert sind. Sie können dann nicht mehr für die vorgesehenen Zwecke eingesetzt werden. In diesem Zusammenhang kann rein beispielhaft auf die DE 10 2018 220 114 A1 oder die ihr weitgehend entsprechende DE 10 2018 220 113 A1 hingewiesen werden. In diesen Schriften wird zum weiteren allgemeinen Stand der Technik beschrieben, dass solche Blockaden anhand von Bewegungsmustern des Fahrzeugs als solche erkannt werden können. In diesem Zusammenhang kann zum weiteren Stand der Technik ferner auf die US 2011/280026 A1 sowie die US 2014/070698 A1 verwiesen werden.

In der Praxis und mit Bezug auf ein Lichtassistenzsystem kann so ein Ausfall eines Sensors beispielsweise eine eingeschränkte Sicht der Kamera sein, insbesondere durch Verschmutzung, starkem Niederschlag, ein Beschlagen einer Scheibe, durch welche die Kamera blickt, oder dergleichen. Dies führt in der Praxis dazu, dass eine Fehlermeldung generiert wird, welche einer das Fahrzeug fahrenden Person anzeigt, dass das Lichtassistenzsystem vorübergehend nicht funktioniert, sodass diese Person entsprechend über die temporäre Nicht-Verfügbarkeit ihres Assistenzsystems informiert ist. Ein dementsprechendes Verfahren, in welchen eine Fehlermeldung auch kurzzeitig unterdrückt werden kann, beschreibt die WO 2004/076231 A2. Andere Verfahren sind aus der DE 10 2009 038 919 A1 bekannt.

Die Aufgabe der hier vorliegenden Erfindung besteht nun darin, ein verbessertes Verfahren zum Betreiben eines Lichtassistenzsystems gemäß dem Oberbegriff des Anspruchs 1 anzugeben, welches eine unnötige Anzeige von Fehlermeldungen reduziert. Erfindungsgemäß wird diese Aufgabe durch ein Verfahren zum Betreiben eines Lichtassistenzsystems mit den Merkmalen im Anspruch 1, und hier insbesondere im kennzeichnenden Teil des Anspruchs 1, geöst. Vorteilhafte Ausgestaltungen und Weiterbildungen des erfindungsgemäßen Verfahrens ergeben sich dabei aus den von diesem Hauptanspruch abhängigen Unteransprüchen.

Bei dem Verfahren ist es so, dass bei einer Fahrt in einer städtischen Umgebung eventuell auftretende Fehlermeldungen betreffend die eingeschränkte Sicht der Kamera unterdrückt werden. Wie oben bereits ausgeführt ist es bei derartigen Lichtassistenzsystemen meist ohnehin notwendig, städtische Umgebungen auf die eine und/oder die andere Art zu erkennen. Das Lichtassistenzsystem weiß also, dass es in einer städtischen Umgebung ist, und dass das Fernlicht, für welches das Assistenzsystem bezüglich eines Aufblendens und/oder Abblendens sowie gegebenenfalls der Entblendung von entgegenkommenden Verkehrsteilnehmern oder auch vorausfahrenden Verkehrsteilnehmern zuständig ist, nicht notwendig ist. In der städtischen Umgebung wird vielmehr durchgehend mit dem Abblendlicht gefahren.

Nun ist es aber insbesondere so, dass viele Personen, welche ihr Fahrzeug nutzen, die Nutzung in einer städtischen Umgebung starten. Insbesondere in den Herbst- und Wintermonaten kommt es dabei häufiger vor, dass bei entsprechend niedrigen Temperaturen und beim stehenden Fahrzeug die Innenseite der Windschutzscheibe relativ schnell beschlägt, da sich hier Feuchtigkeit aus dem Fahrzeug an der typischerweise kälteren Scheibe absetzt. Viele Kameras, welche unter anderem für das Lichtassistenzsystem und gegebenenfalls auch für andere Anwendungen genutzt werden, sind im vorderen oberen Bereich der Windschutzscheibe installiert und in Fahrtrichtung nach vorn ausgerichtet. Kommt es nun zu einem Beschlagen der Windschutzscheibe, dann wird die Sicht dieser Kamera eingeschränkt. Vergleichbares gilt für eine im oberen Bereich gegebenenfalls noch mit Eis bedeckte Windschutzscheibe oder Eis-/Schneereste, welche vor der Fahrt im oberen Bereich der Windschutzscheibe, durch welche eine das Fahrzeug fahrende Person typischerweise nicht blickt, nicht sorgfältig entfernt worden sind. Genau dies führt nun, wenn die Fahrt in einer städtischen Umgebung bei Dunkelheit startet, dazu, dass das Lichtassistenzsystem erstmal aktiviert wird und dann erkennt, dass die Sicht der von ihm genutzten Kamera blockiert oder eingeschränkt ist. Dies spielt in der städtischen Umgebung jedoch für die Praxis keine Rolle, da in der städtischen Umgebung ohnehin mit dem Abblendlicht gefahren wird und das Assistenzsystem hier gar nicht in dem angedachten Maß zum Aufblenden und Abblenden des Fernlichts zum Einsatz kommt.

Durch das Verfahren wird in einer solchen Situation nun eben diese Fehlermeldung bezüglich der eingeschränkten Kamerasicht, welche keinerlei Auswirkung auf die praktische Nutzung des Fahrzeugs hat, entsprechend unterdrückt. Hierdurch wird die das Fahrzeug fahrende Person von unnötigen Meldungen entlastet und kann sich demzufolge besser auf das Verkehrsgeschehen konzentrieren als wenn im Kombiinstrument eine entsprechende Meldung im Sinne von "Fernlichtassistent aufgrund der blockierten Kamerasicht deaktiviert" oder dergleichen angezeigt werden würde. Durch das erfindungsgemäße Verfahren wird also eine solche Fehlermeldung, dass die Kamera eine eingeschränkte Sicht aufweist, in den ohnehin erfassten Situationen, in denen kein Fernlicht benötigt wird, unterdrückt.

Das Verfahren sieht es erfindungsgemäße vor, dass beim Verlassen der städtischen Umgebung und weiterhin vorliegender Fehlermeldung betreffend die eingeschränkte Sicht der Kamera diese nach einer festgelegten Zeitspanne ab dem Verlassen der städtischen Umgebung angezeigt wird.

Das erfindungsgemäße Verfahren stellt damit sicher, dass beim Verlassen der städtischen Umgebung die Fehlermeldung, wenn sie noch aktuell ist, also wenn beispielsweise die Scheibe noch entsprechend beschlagen ist, angezeigt wird, um die das Fahrzeug fahrende Person in dieser Situation, in der das Fernlicht eine sinnvolle Unterstützung darstellt, entsprechend zu informieren. Dabei wird eine festgelegte Zeitspanne abgewartet, bevor die Fehlermeldung angezeigt wird, um einerseits die das Fahrzeug fahrende Person nicht unmittelbar an der Grenze des städtischen Gebiets mit der Fehlermeldung zu "überfallen" und andererseits, um bei einer Fahrt im Randbereich des städtischen Gebiets sicherzustellen, dass die Fehlermeldung nicht unnötigerweise angezeigt wird, wenn das Fahrzeug innerhalb einer sehr kurzen Zeitspanne zurück in das städtische Gebiet fährt.

Eine sehr günstige Ausgestaltung dieser Idee sieht es dabei vor, dass eine das Fahrzeug nutzende Person die festgelegte Zeitspanne aktiv verändern kann. Das Unterdrücken der Warnmeldung nach dem Verlassen des städtischen Gebiets kann also durch eine das Fahrzeug nutzende Person bezüglich der Zeitspanne beeinflusst werden, beispielsweise indem diese eine bevorzugte Zeitspanne über ein Menüsystem oder dergleichen selbsttätig konfiguriert, um das Fahrzeug und das potenzielle Anzeigen bzw. Unterdrücken derartiger Fehlermeldungen an ihre individuellen Bedürfnisse anzupassen.

Wie bereits erwähnt kann das Verfahren insbesondere dann sinnvoll sein, wenn eine hinter der Windschutzscheibe angeordnete Kamera mit Blickrichtung in Fahrtrichtung durch die Windschutzscheibe für das Lichtassistenzsystem genutzt wird. Auch für andere Kameras, beispielsweise Kameras im Außenbereich, welche von Schnee oder Eis oder einer großen Menge an Feuchtigkeit in der Sicht beeinträchtigt sein können, kann das Verfahren jedoch ebenso eingesetzt werden.

Die Einrichtung zum Erkennen der städtischen Umgebung kann dabei insbesondere eine über Umgebungssensoren erkannte Straßenbeleuchtung, eine über einen Sensor erfasste Helligkeit, eine Fahrgeschwindigkeit, sowie eine über Satellitennavigation ermittelte Position des Fahrzeugs im Vergleich zu einer die städtische Umgebung aufzeigenden Karte nutzen, um festzustellen, ob sich das Fahrzeug in einer städtischen Umgebung befindet. Insbesondere lassen sich diese Möglichkeiten auch untereinander kombinieren, um so die städtische Umgebung möglichst zuverlässig erkennen zu können.

Gemäß einer außerordentlich günstigen Weiterbildung hiervon kann es dabei vorgesehen sein, dass die städtische Umgebung anhand der Straßenbeleuchtung festgestellt wird, und zwar indem die Anzahl von erkannten Straßenlaternen gezählt wird, und nachfolgend anhand einer vorgegebenen Anzahl von Straßenlaternen, insbesondere einer vorgegebenen Anzahl von Straßenlaternen je Entfernungseinheit, auf eine städtische Umgebung geschlossen wird.

Bei diesem Verfahren werden also Straßenlaternen gezählt und als Gesamtzahl oder als Zahl je Entfernungseinheit ausgewertet. Ab einer bestimmten Zahl wird dann davon ausgegangen, dass eine städtische Umgebung vorliegt. Ergänzend kann dies beispielsweise über einen Helligkeitssensor kombiniert werden, um so bei bestimmten Helligkeitswerten ohnehin eine städtische Umgebung oder Tageslicht zu erkennen und das Lichtassistenzsystem als solches im Modus für die städtische Umgebung zu betreiben oder bei Tag entsprechend zu deaktivieren. Als weitere Ergänzung kann außerdem die Position des Fahrzeugs ermittelt werden, insbesondere um die über die Sensorik des Fahrzeugs erkannten Ergebnisse zu validieren.

Weitere vorteilhafte Ausgestaltungen des erfindungsgemäßen Verfahrens ergeben sich auch aus dem Ausführungsbeispiel, welches nachfolgend unter Bezugnahme auf die Figuren näher dargestellt ist.

Dabei zeigen:
- Fig. 1: eine schematische Darstellung eines Fahrzeugs mit einer Kamera in einer von der Kamera erkannten städtische Umgebung; und
- Fig. 2: ein Ablaufdiagramm einer möglichen Ausgestaltung des erfindungsgemäßen Verfahrens.

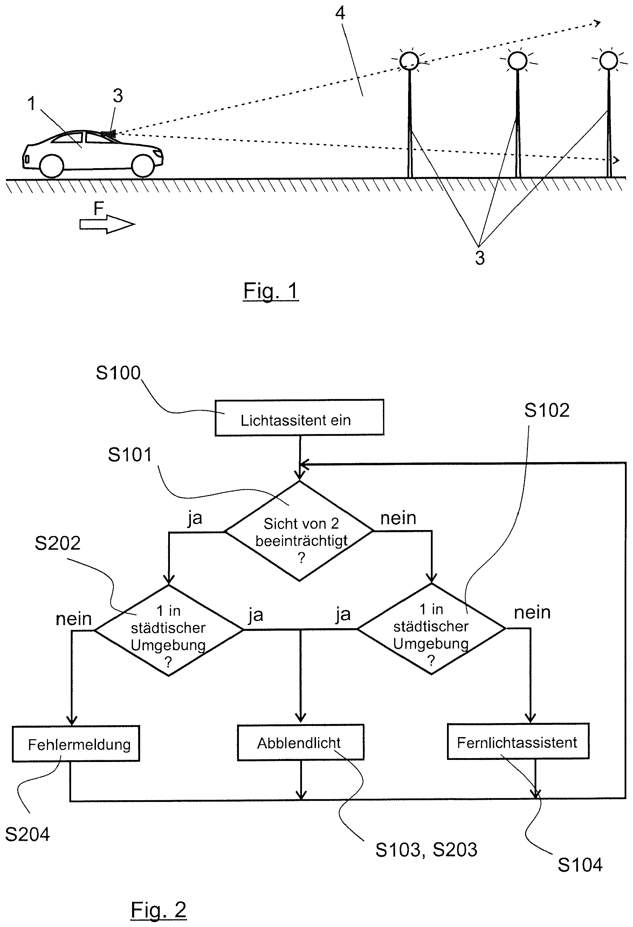

In der Darstellung der Figur 1 ist ein mit 1 bezeichnetes Fahrzeug zu erkennen, welches mit einer angedeuteten Multifunktionskamera 2 ausgestattet sein soll. Diese Multifunktionskamera dient einerseits zur Umgebungserfassung der Umgebung des Fahrzeugs 1 und kann andererseits auch für ein sogenanntes Lichtassistenzsystem zum Einsatz kommen.

In dem in Figur 1 dargestellten Szenario sind rein beispielhaft drei jeweils mit 3 bezeichnete Straßenlaternen am Rand einer von dem Fahrzeug befahrenen Straße schematisch angedeutet. Diese befinden sich in dem mit 4 bezeichneten Kamerasichtfeld und werden von der Multifunktionskamera in einer Recheneinheit innerhalb der Multifunktionskamera oder gegebenenfalls auch außerhalb dieser Multifunktionskamera 2 entsprechend erkannt. Ab einer bestimmten Anzahl wird dann gefolgert, dass sich das Fahrzeug in einer städtischen Umgebung befindet.

Diese oder andere Möglichkeiten zur Erkennung einer städtischen Umgebung lassen sich nun für ein Lichtassistenzsystem in an sich bekannter Art und Weise einsetzen. In der städtischen Umgebung wird das Lichtassistenzsystem dann auf das sogenannte Abblendlicht beschränkt, liegt keine städtische Umgebung vor, so wird auch das Fernlicht entsprechend eingesetzt und durch das Lichtassistenzsystem bei Bedarf auf- und abgeblendet oder es werden vorausfahrende oder entgegenkommende Verkehrsteilnehmer aktiv entblendet, wenn zum Beispiel Pixelscheinwerfer oder Scheinwerfer mit anderen geeigneten Methoden zur Beeinflussung der Lichtverteilung zum Einsatz kommen, die ein gezieltes Entblenden einzelner Verkehrsteilnehmer ermöglicht.

In der Darstellung der Figur 2, welche einen prinzipiellen Verfahrensablauf zeigt, ist dieser Teil des an sich bekannten Lichtassistenzsystems im Wesentlichen im rechten unteren Bereich dargestellt. Auf diesen wird nachfolgend noch im Detail eingegangen.

Die Multifunktionskamera 2 ist anders als es in der schematischen Darstellung der Figur 1 angedeutet ist, typischerweise hinter der Windschutzscheibe des Fahrzeugs 1 angeordnet und blickt in Fahrtrichtung F nach vorn. Ist die Windschutzscheibe nun beschlagen oder in dem oberen Bereich, in dem die Multifunktionskamera 2 durch diese hindurchblickt, nicht vollständig von Eis und Schnee befreit, dann kann die Sicht der Multifunktionskamera 2 beeinträchtigt sein. Liegt dieser Fall vor, dann wird bei den Systemen gemäß dem Stand der Technik eine Fehlermeldung generiert, welche unter Umständen jedoch eine das Fahrzeug 1 fahrende Person nur unnötig irritiert und vom Verkehrsgeschehen ablenkt.

Das vorgeschlagene Verfahren sieht es deshalb vor, dass nach dem Einschalten des Lichtassistenzsystems im ersten mit S100 bezeichneten Schritt in Schritt S101 eine Abfrage erfolgt, ob die Sicht der Multifunktionskamera 2 beeinträchtigt ist. Ist dies nicht der Fall, dann wird der herkömmliche Betrieb des Lichtassistenzsystems zum Einsatz kommen. Dafür ist es, wie eingangs bereits erwähnt, notwendig zu erkennen, ob sich das Fahrzeug 1 in einer städtischen Umgebung befindet. Dies erfolgt hier über die Abfrage im Schritt S102. Befindet sich das Fahrzeug in einer städtischen Umgebung, dann wird im Schritt S103 der Betrieb ausschließlich mit dem Abblendlicht realisiert und das Verfahren springt zum Anfang zurück und durchläuft die entsprechenden Schritte immer wieder. Wird nun das städtische Gebiet verlassen oder ist der Start des Lichtassistenzsystems außerhalb des städtischen Gebiets, dann wird anstelle des Schritts S103 der Schritt S104 erfolgen, in welchem das Fernlicht aktiviert ist, das Lichtassistenzsystem also als Fernlichtassistent aktiv im Einsatz ist. Die Schritte S102 - S104 sind, wie oben bereits erwähnt, im Prinzip der Teil der wie bei einem herkömmlichen Lichtassistenzsystem realisiert ist, wobei die Abfrage S102 in jedem Fall notwendig ist, um zu unterscheiden, ob der Betrieb mit Abblendlicht gemäß des Schritts S103 oder mit Fernlicht gemäß des Schritts S104 erfolgen soll.

Das erfindungsgemäße Verfahren kommt nun dann zum Einsatz, wenn die Sicht entsprechend beeinträchtigt ist. Typischerweise würde dies zu einer Fehlermeldung führen, unabhängig von der ansonsten vorliegenden Nutzung des Lichtassistenzsystems. Erfindungsgemäß wird in diesem Zweig, bei dem die Abfrage im Schritt S101 mit ja beantwortet wird, nun ebenfalls die Abfrage, ob sich das Fahrzeug 1 in einer städtischen Umgebung befindet, durchgeführt. Dieser Schritt ist hier mit S202 bezeichnet und nutzt die für den Schritt S102 ohnehin vorhandene Datengrundlage. Ist dies nicht der Fall, befindet sich das Fahrzeug also außerhalb einer städtischen Umgebung, dann wird im Schritt S204 die an sich bekannte Fehlermeldung generiert, beispielsweise dass der Fernlichtassistent aufgrund einer beeinträchtigten Sicht der Kamera 2 nicht zur Verfügung steht, und beispielsweise auf einem Multifunktionsdisplay des Fahrzeugs 1 für eine das Fahrzeug 1 fahrende Person ausgegeben. Oft befindet sich das Fahrzeug 1 nun jedoch in einer städtischen Umgebung, weil Fahrzeuge 1 mit hoher Wahrscheinlichkeit in einer städtischen Umgebung ihre Fahrt beginnen, und das Problem der beschlagenen Scheiben typischerweise zu Beginn der Fahrt auftritt. In diesem Fall wird nach der Abfrage im Schritt S202 unmittelbar zum Schritt S203 gesprungen, also der für die städtische Umgebung sinnvolle Betrieb mit dem Abblendlicht initiiert. Auf die Fehlermeldung wird verzichtet bzw. diese wird bei dem erfindungsgemäßen Verfahren aktiv unterdrückt. Damit wird die das Fahrzeug 1 fahrende Person nicht mit in dieser Situation unnötigen Fehlermeldungen belastet und gegebenenfalls vom Verkehrsgeschehen abgelenkt.

Das Verfahren springt auch hier vergleichbar wie vom Schritt S204 wieder zurück vor die Abfrage im Schritt S101, sodass auf die sich verändernde Situation sowohl hinsichtlich der beeinträchtigten Sicht der Kamera im Schritt S101 als auch beispielsweise auf das Verlassen der städtischen Umgebung in einem der Schritte S102 oder S202 entsprechend reagiert werden kann.

## Patentansprüche

1. Verfahren zum Betreiben eines Lichtassistenzsystems für ein Fahrzeug (1), welches mit einer Kamera (2) zumindest zum Erfassen von entgegenkommenden oder vorausfahrenden Verkehrsteilnehmern und mit einer Einrichtung zum Erkennen einer städtischen Umgebung ausgestattet ist, wobei bei einer Fahrt in der städtischen Umgebung das Einschalten eines Fernlichts unterdrückt wird,
wobei
bei einer Fahrt in der städtischen Umgebung auftretende Fehlermeldungen betreffend die
eingeschränkte Sicht der Kamera (2) unterdrückt werden, **dadurch gekennzeichnet, dass**
beim Verlassen der städtischen Umgebung durch das Fahrzeug (1) und weiterhin vorliegender Fehlermeldung betreffend die eingeschränkte Sicht der Kamera (2) diese Fehlermeldung nach einer festgelegten Zeitspanne ab dem Verlassen der städtischen Umgebung angezeigt wird.

2. Verfahren nach Anspruch 1,
**dadurch gekennzeichnet, dass**
eine das Fahrzeug (1) nutzende Person die festgelegte Zeitspanne aktiv verändern kann.

3. Verfahren nach Anspruch 1 oder 2,
**dadurch gekennzeichnet, dass**
eine hinter der Windschutzscheibe des Fahrzeugs (1) angeordnete Kamera (2) mit Blick in Fahrtrichtung (F) durch die Windschutzscheibe für das Lichtassistenzsystem genutzt wird

4. Verfahren nach einem der Ansprüche 1 bis 3,
**dadurch gekennzeichnet, dass**
die Einrichtung zum Erkennen der städtischen Umgebung zumindest die Straßenbeleuchtung, die Helligkeit die Fahrzeuggeschwindigkeit und/oder die über ein Satellitennavigationssystem erfasste Position des Fahrzeugs (1) im Bezug auf eine Karte der städtischen Umgebung oder eine Kombination hieraus auswertet.

5. Verfahren nach Anspruch 4,
**dadurch gekennzeichnet, dass**
die städtische Umgebung anhand der Straßenbeleuchtung festgestellt wird, in dem die Anzahl von erkannten Straßenlaternen (3) gezählt wird, und ab einer vorgegebenen absoluten Zahl von Straßenlaternen (3) oder einer vorgegebenen Anzahl von Straßenlaternen (3) die Entfernungseinheit auf eine städtische Umgebung geschlossen wird.

## Claims

1. Method for operating a light assistance system for a vehicle (1), which is equipped with a camera (2) at least for detecting oncoming road users or road users traveling in front, and is equipped with a device for identifying an urban environment, the switching on of a high beam being suppressed when driving in the urban environment, and error messages relating to the restricted view of the camera (2) which occur when driving in the urban environment being suppressed, **characterized in that,** when the vehicle (1) leaves the urban environment and an error message relating to the restricted view of the camera (2) is still present, this error message is displayed after a specified period of time from leaving the urban environment.

2. Method according to claim 1,
**characterized in that**
a person using the vehicle (1) can actively change the specified period of time.

3. Method according to claim 1 or 2,
**characterized in that**
a camera (2) arranged behind the windscreen of the vehicle (1) and looking in the direction of travel (F) through the windscreen is used for the light assistance system

4. Method according to any of claims 1 to 3,
**characterized in that**
the device for identifying the urban environment evaluates at least the street lighting, the brightness, the vehicle speed and/or the position of the vehicle (1) detected via a satellite navigation system in relation to a map of the urban environment, or a combination thereof.

5. Method according to claim 4,
**characterized in that**
the urban environment is determined on the basis of the street lighting by counting the number of identified street lamps (3), and, from a predetermined absolute number of street lamps (3) or a predetermined number of street lamps (3), the distance unit is concluded to be an urban environment.

## Revendications

1. Procédé permettant de faire fonctionner un système d'assistance lumineuse pour un véhicule (1) qui est équipé d'une caméra (2) au moins pour la détection d'usagers de la route venant en sens inverse ou roulant devant et d'un dispositif pour la reconnaissance d'un environnement urbain, dans lequel l'enclenchement d'un feu de route est réprimé lors d'un trajet dans l'environnement urbain, dans lequel des messages d'erreur concernant la visibilité limitée de la caméra (2) apparaissant lors d'un trajet dans l'environnement urbain sont réprimés, **caractérisé en ce que,** lors d'un départ du véhicule (1) de l'environnement urbain et lorsque le message d'erreur concernant la visibilité limitée de la caméra (2) continue d'être présent, ledit message d'erreur est affiché après un laps de temps déterminé à partir du départ de l'environnement urbain.

2. Procédé selon la revendication 1,
**caractérisé en ce que**
une personne utilisant le véhicule (1) peut modifier activement le laps de temps défini.

3. Procédé selon la revendication 1 ou 2,
**caractérisé en ce que**
une caméra (2) disposée derrière le pare-brise du véhicule (1), laquelle comporte une vue dans le sens de la marche (F) à travers le pare-brise, est utilisée pour le système d'assistance lumineuse.

4. Procédé selon l'une des revendications 1 à 3,
**caractérisé en ce que**
le dispositif pour la reconnaissance de l'environnement urbain évalue au moins l'éclairage des voies publiques, la luminosité, la vitesse de véhicule et/ou la position du véhicule (1) détectée par l'intermédiaire d'un système de navigation par satellite par rapport à une carte de l'environnement urbain ou une combinaison de celles-ci.

5. Procédé selon la revendication 4,
**caractérisé en ce que**
l'environnement urbain est déterminé à l'aide de l'éclairage des voies publiques en comptant le nombre de lampadaires (3) reconnus et, à partir d'un nombre absolu prédéfini de lampadaires (3) ou d'un nombre prédéfini de lampadaires (3), l'unité de distance est déduite d'un environnement urbain.
